# EUROPÄISCHE PATENTSCHRIFT

(11) **EP 3 487 289 B1**
(45) Veröffentlichungstag und Bekanntmachung des Hinweises auf die Patenterteilung: **27.04.2022**
(21) Anmeldenummer: 17751037.7
(22) Anmeldetag: 20.07.2017
(51) Int. Cl.: A01J 5/08

(54) **EINLASSVENTIL FÜR EINEN MELKBECHER**
INLET VALVE FOR A TEAT CUP
VALVE D'ENTRÉE POUR UN GOBELET TRAYEUR

(30) Priorität: 22.07.2016 DE 102016213519
(43) Veröffentlichungstag der Anmeldung: 29.05.2019
(73) Patentinhaber: Maier, Jakob, 86842 Türkheim (DE); Hatzack, Wilfried, 86842 Türkheim (DE)
(72) Erfinder: Maier, Jakob, 86842 Türkheim (DE); Hatzack, Wilfried, 86842 Türkheim (DE)
(74) Vertreter: Grünecker Patent- und Rechtsanwälte PartG mbB
(86) Internationale Anmeldenummer: PCT/EP2017/068327
(87) Internationale Veröffentlichungsnummer: WO 2018/015480

(56) Entgegenhaltungen:
- EP-A1- 0 131 646
- DE-A1- 2 046 276
- DE-B3-102007 061 853

## Beschreibung

Die vorliegende Erfindung betrifft allgemein das Gebiet der Melktechnik und insbesondere den Bereich des eigentlichen Melkvorgangs, wobei einer Zitze über einen Melkbecher mittels einer Melkanlage Milch entzogen wird.

Beim Melken von Milchtieren wird in überwiegendem Maße eine automatisierte oder zumindest halbautomatisierte Melkanlage eingesetzt, die grundsätzlich aus einer den Betriebsunterdruck erzeugenden Vakuumpumpe, einer aus mehreren Melkplätzen Milch abführende Milchleitung und in der Regel aus mehreren Melkgeschirren aufgebaut ist. Das Melkgeschirr weist in der Regel eine der jeweiligen Tierart entsprechende Anzahl an Melkbechern auf, die wiederum entsprechend an eine Zitze des Tieres anzulegen sind und dort durch die den durch die Vakuumpumpe erzeugten Betriebsunterdruck anhaften.

Abhängig von der angewendeten Melkstrategie wird mit oder ohne Stimulation des Tieres der Milchentzug so ausgeführt, dass in der Regel eine pulsierende Ableitung der Milch aus der Zitze durchgeführt wird. D.h., der Melkbecher ist mit einer elastischen Zitzenaufnahme versehen, die in einer Melkbecherhülse eingeführt ist und von dieser mechanisch stabilisiert und mit den nötigen Anschlüssen zum Ableiten der ermolkenen Milch verbunden ist. Die elastische Zitzenaufnahme bildet dabei mit ihrer Außenwand einen Pulsationsraum mit der Wandung der Melkbecherhülse, der abwechselnd mit Druck und Unterdruck beaufschlagt wird, so dass sich ein Einfalten der Zitzenaufnahme ergibt, wenn Pulsationsraum mit Druck, beispielsweise Atmosphärendruck, beaufschlagt ist. In dieser Phase wird die elastische Zitzenaufnahme wesentlich intensiver an die Zitze angedrückt und führt in der Regel zu einem Verschluss des Strichkanals und damit zu einer Unterbrechung des Milchstroms aus der Zitze heraus. Gleichzeitig ergibt sich durch diese Einfaltung der Zitzenaufnahme eine massierende Wirkung auf die Zitze. Wenn der Pulsationsraum andererseits mit Unterdruck beaufschlagt ist, entfaltet sich die elastische Zitzenaufnahme aufgrund ihrer Eigenelastizität und der fehlenden oder sehr geringen Druckdifferenz zwischen Außenwand und Innenraum der Zitzenaufnahme und hebt den seitlichen Druck auf den Strichkanal der Zitze auf, so dass im Wesentlichen ein ungehindertes Abfließen der Milch aufgrund des anstehenden Betriebsunterdrucks möglich ist. Die Frequenz und die entsprechenden Zeitdauern dieser Phasen sind in der Regel aufgrund tierspezifischer Eigenheiten einstellbar und können von 40 bis 70 bei größeren Milchtieren und bis zu 120 und mehr Pulsen pro Minute bei kleineren Milchtieren, etwa bei Schafen und Ziegen, reichen.

Obwohl sich diese Melktechnik prinzipiell als erfolgreich erwiesen hat, gilt es dennoch, gewisse Gegebenheiten zu berücksichtigen. Beispielsweise wird zu Beginn der Phase mit Einfaltung der Zitzenaufnahme, die auch als Entlastungsphase bezeichnet wird, da hier eine massierende Wirkung an der Zitze und eine Unterbrechung des Milchstroms erreicht wird, so dass die bereits in dem Milchschlauch vorhandene Milch eine Art Milchpfropfen bildet, der nunmehr über die Milchleitung abzuführen ist. Beim Abtransport dieses Milchpfropfens kann jedoch über dem Milchpfropfen, das heißt, zwischen der Zitze und dem Pfropfen aufgrund des sich zunächst wegbewegenden Milchpfropfens und der daraus resultierenden Volumenzunahme, der Unterdruck größer werden, so dass die Druckdifferenz zwischen dem saugenden Betriebsunterdruck in der Milchleitung und dem größer werdenden Unterdruck zwischen Zitze und Milchpfropfen kleiner wird und ein Abfließen der Milch erschwert. Des Weiteren ist auch die Zunahme des Unterdrucks für die Zitze während der eigentlichen Entlastungsphase ungünstig, da sie zwar einerseits die massierende Wirkung erfährt, andererseits aber durch den erhöhten Unterdruck stärker belastet wird. Bei Umschaltung auf die Saugphase, d.h. Aufhebung der Einfaltung der Zitzenaufnahme, kann unter Umständen sogar der zuvor erzeugte Milchpfropfen in Richtung zur Zitze zurück beschleunigt werden und damit zu einer ungewünschten äußerst turbulenten Strömung oder sogar einer Benetzung der Zitze führen. D.h., tendenziell wird die Fähigkeit des Ableitens der ermolkenen Milch reduziert aufgrund der geringen Druckdifferenz nach Erzeugung des Milchpfropfens und ferner kann es aufgrund der pulsierenden Melkung zu sehr turbulenten Strömungsverhältnissen kommen.

Um daher eine zufriedenstellende Ableitung der Milch zu gewährleisten, wird häufig der Betriebsunterdruck entsprechend erhöht, d.h. es wird eine höhere Druckdifferenz zwischen Atmosphäre und dem Druck in dem Milchleitungssystem erzeugt, um in jedem Falle zu erzwingen, dass Milch in ausreichender Weise abgeleitet werden kann. Der höhere Unterdruck hat jedoch gegebenenfalls nachteilige Auswirkungen auf die Zitze aufgrund der höheren Belastung und kann ferner zu einer stärkeren Turbulenzbildung beitragen, obwohl generell das gewünschte Maß an Milchentzug erreicht werden kann. In anderen Strategien wird zusätzlich oder alternativ versucht, Luft an geeigneten Positionen in die Milchleitung einzuführen, um damit der Verringerung der Druckdifferenz beim Abtransport eines Milchpfropfens entgegenzuwirken. Daher werden beispielsweise an entsprechenden Positionen Lufteinlassöffnungen vorgesehen, die eine kontinuierliche Zuführung von Außenluft ermöglichen, um damit das Auftreten größerer Druckdifferenzen beim Abtransport der Milch zu reduzieren. Diese Maßnahme stellt jedoch einen Kompromiss dar zwischen generell vermehrter Leistung, die der Vakuumpumpe abzuverlangen ist, die die Einführung der zusätzlichen Luft kompensieren muss, um einen gewünschten mittleren Betriebsunterdruck aufrechtzuerhalten, und dem Ziel, insbesondere während der Entlastungsphase die Druckdifferenz zwischen dem Druck unter der Zitze und dem Rest der Milchleitung möglichst gering zu halten.

In anderen Systemen wird ein periodischer, d.h., gesteuerter Lufteinlass durchgeführt, der mit der Pulsation synchronisiert ist, so dass gezielt in der Phase des Ablaufs des Milchpfropfens Luft eingelassen wird. Damit wird eine Zunahme des Unterdrucks unter der Zitze vermieden oder es wird sogar ein geringer Druckanstieg bewerkstelligt, so dass die dadurch entstehende Druckdifferenz zwischen dem Anfang des Milchpfropfens und der Milchleitung einen effizienten Abtransport der Milch begünstigt und auch im Wesentlichen verhindert, dass bei Beginn der nächsten Saugphase der Milchpfropfen wieder in Richtung zur Zitze beschleunigt wird. Aufgrund der Tatsache, dass die Luft nur während einer gewissen Phase eingeführt wird, ist es möglich, eine größere Luftmenge innerhalb eines kurzen Zeitintervalls einzuführen, wohingegen im zeitlichen Mittel nicht mehr oder gegebenenfalls sogar weniger Luft in das gesamte Milchleitungssystem eingeführt wird im Vergleich zu einem kontinuierlichen Lufteinlass, so dass die zusätzliche Leistung der Vakuumpumpe nur gering bleibt. Zu diesem Zweck werden so genannte Lufteinlassventile vorgesehen, die zwar prinzipiell die gewünschte Funktion ausführen, aber einen komplexen Aufbau haben.

Eine weitere Problematik, die mit der Milchströmung und mit dem Einlass von zusätzlicher Luft in die Milch einhergeht, ist die Tatsache, dass generell die Qualität der Milch beim Zusammentreffen mit Luft ungünstig beeinflusst werden kann. Ohne die vorliegende Anmeldung diesbezüglich auf eine Theorie einschränken zu wollen, wird dennoch angenommen, dass insbesondere der Kontakt von Luft mit mehr oder minder turbulent strömender Milch oder gar "aufgeschäumter" Milch in der Milchleitung, wie diese beispielsweise durch äußerst turbulente Strömungsverhältnisse hervorgerufen werden kann, zu einer Wechselwirkung mit den freien Fettsäuren in der Milch führt, wodurch diese in höherem Maße oxidiert werden. Man nimmt an, dass insbesondere diese Wechselwirkung der Luft mit den freien Fettsäuren oder auch anderen Bestandteilen der Milch, begünstigt durch eine große Oberflächenbildung der turbulent strömenden oder "aufgeschäumten" Milch, zumindest zu einer deutlichen geschmacklichen Beeinträchtigung der Milch führt, so dass beispielsweise bei gewissen Milchprodukten deutliche Qualitätseinbußen hinzunehmen sind.

Ein weiterer wichtiger Punkt für die Milchqualität ist die mechanische "Schädigung" der Milch insbesondere auch beim Ableiten der Milch von der Zitze in einen Milchbehälter und auch anschließend bei der temporären Lagerung der Milch und beim Transport zur Molkerei. Man nimmt an, dass die durch die mechanische Wechselwirkung von Milchbestandteilen, etwa von Fetttröpfchen, mit den bei der Ableitung der Milch beteiligten Komponenten zur vorzeitigen Freisetzung von Enzymen führt, die dann zu einer Änderung der Eigenschaften der Milch führt, die in dieser Phase der Milchproduktion nicht gewünscht ist.

Die Druckschrift EP 0 131 646 A1 beschreibt ein Lufteinlassventil zum Einlassen von Luft in die Milchabführleitung eines Melkbechers oder eines Sammelstücks, wobei ein Ventilteller in Verbindung mit einem Ventilsitz ein Ventil bildet, das in Abhängigkeit von dem Pulsatordruck an der Membran periodisch öffnet und schließt. Das Ventil zeichnet sich insbesondere dadurch aus, dass eine entsprechend Verbindungsleitung, die die umgebende Atmosphäre mit dem Pulsatorraum verbindet, in der Ventilsitzfläche mündet. Ferner ist insbesondere der Ventilteller lösbar an der Membran gehaltert, sodass der Ventilteller leicht abnehmbar ist und damit den Ventilraum leicht zugänglich macht.

Im Hinblick auf die zuvor dargestellte Situation ist es daher eine Aufgabe der vorliegenden Erfindung, Mittel vorzusehen, die generell zu einer Effizienzsteigerung bei der Milchableitung von der Zitze zu einer Milchleitung beitragen können, um damit zumindest einen der zuvor genannten Nachteile abzuschwächen, und gleichzeitig ein hohes Maß an Verträglichkeit mit der Tiergesundheit erreichen.

Diese Aufgabe wird erfindungsgemäß gelöst durch ein Ventil mit den Merkmalen des Anspruchs 1 sowie durch einen Melkbecher mit den Merkmalen des Anspruchs 7.

Weitere vorteilhafte Ausführungsformen sind in den jeweiligen abhängigen Ansprüchen definiert.

Gemäß einem Aspekt der vorliegenden Erfindung wird die zuvor genannte Aufgabe gelöst durch ein Einlassventil für einen Melkbecher zum gesteuerten Einlass von Luft und/oder Gas in einen Milchableitungsbereich des Melkbechers. Das Einlassventil umfasst einen Ventilkörper mit einem steuerbaren Strömungskanal, der an einer Dichtfläche mündet. Das Ventil weist ferner eine elastische Membran auf, die auf einer ersten Seite mit in einem Pulsationsraum des Melkbechers vorherrschenden Druck beaufschlagbar ist und auf einer zweiten Seite einen mit der Membran als Einheit aufgebauten Dichtkörper aufweist, der in einer ersten Stellung den Strömungskanal durch Anliegen an der Dichtfläche schließt. Des Weiteren umfasst das Einlassventil ein Federelement, das mit der elastischen Membran gekoppelt ist, um diese zu der Dichtfläche hin vorzuspannen, so dass in einer zweiten Stellung des Dichtkörpers der Strömungskanal geöffnet ist.

Das erfindungsgemäße Einlassventil gestattet einen gesteuerten Einlass von Luft und/oder Gas und ist dazu mit dem Pulsationsraum des Melkbechers verbunden. Die Verbindung erfolgt über eine elastische Membran, die einerseits den in dem Pulsationsraum herrschenden Druck aufnehmen kann und auf einer anderen Seite einen als Einheit mit der Membran vorgesehenen Dichtkörper an eine Dichtfläche andrücken kann. Insbesondere der Aufbau mit einer Membran und Dichtkörper als Einheit führt zu einem äußerst zuverlässigen Betriebsverhalten, da durch die Reduzierung der Anzahl an Komponenten insbesondere für den Mechanismus zum Abdichten des Strömungskanals die Wahrscheinlichkeit einer Funktionsstörung deutlich reduziert wird. Aufgrund dessen ist auch eine zuverlässige gesteuerte Luft- und/oder Gaszufuhr gewährleistet, da im Gegensatz zu konventionellen Lufteinlassventilen eine wesentlich reduzierte Fehlerquote beim Melkbetrieb auftritt, die ansonsten in konventionellen Einlassventilen zu einer langen Zeit unbemerkten reduzierten Effizienz oder gar einer deutlich behinderten Ableitung der Milch führen kann. Auch ergibt sich im Hinblick auf das Vorsehen als Einheit von Membran und Dichtkörper ein wesentlicher Vorteil bezüglich auf die Herstellung der Komponente, die einerseits eine deutliche Kostenreduzierung ermöglicht, aber auch im Hinblick auf eine hohe und gleichbleibende Qualität deutliche Verbesserungen bringt gegenüber einer Anordnung mit mehreren Komponenten zwischen Membran und Dichtkörper.

Erfindungsgemäß sind die elastische Membran und der damit als Einheit aufgebaute Dichtkörper aus dem gleichen Material hergestellt. Dies führt zu einer weiteren Vereinfachung des gesamten Herstellungsvorgangs und auch zu einer geringeren Fertigungstoleranz zwischen den einzelnen Membrankomponenten, da beispielsweise ein Herstellungsprozess etwa unter Verwendung einer Form ausgeführt werden kann, und somit eine hohe Reproduzierbarkeit und geringe Fertigungsabweichungen bei dennoch hoher Stückzahl erreichbar sind. Erfindungsgemäß wird nicht nur das gleiche Material verwendet, sondern Membran und Dichtkörper werden als einzelnes, d.h. integrales, Bestandteil hergestellt.

In einer weiteren vorteilhaften Ausführungsform ist an dem Ventilkörper ein Anschluss in Strömungsverbindung mit dem Strömungskanal zum Anschluss einer Leitung zum Luft- und/oder Gaseinlass in den Melkbecher vorgesehen, und an dem Anschlusselement ist ein Verriegelungselement zur Verriegelung der Leitung ausgebildet. Diese Ausführungsvariante ergibt somit eine effiziente Art, die Leitung, die an dem Ventilkörper zu befestigen ist, in einfacher und zuverlässiger Weise anzubringen, so dass ein unbeabsichtigtes Herausziehen der Leitung aus dem Ventilkörper nahezu unmöglich ist. Dadurch wird eine erhöhte Betriebssicherheit geschaffen, da auch bei häufigen mechanischen Belastungen, wie sie im täglichen Melkbetrieb auftreten, dennoch eine zuverlässige Verbindung zwischen dem Ventilkörper und der Leitung für den Gaseinlass gewährleistet ist. In Verbindung mit der bereits zuvor beschriebenen erhöhten Betriebssicherheit aufgrund der reduzierten Bauteiltoleranzen und geringeren Anfälligkeit für Fehler wird somit ein noch höheres Maß an Zuverlässigkeit und damit gleichbleibender Qualität bei der Milchableitung erreicht.

In einer weiteren Ausführungsvariante eines Melkbechers, der das Ventil beinhaltet, ist an der Leitung ein komplementäres Verriegelungselement vorgesehen, das mit dem Verriegelungselement des Anschlusses lösbar in Eingriff gebracht werden kann.

D.h., die zuverlässige Arretierung der Leitung an dem Ventilkörper kann durch einfache konstruktive Maßnahmen auf Seite des Ventilkörpers und auf Seite der Leitung erreicht werden, so dass diesbezüglich keine weiteren Maßnahmen oder die Herstellung weiterer Komponenten erforderlich sind. D.h., die zuverlässige Arretierung wird durch die Verriegelungselemente erreicht, die bereits beim Herstellungsvorgang der jeweiligen Komponente mit hoher struktureller Genauigkeit und Gleichmäßigkeit gebildet werden können.

In einer weiteren vorteilhaften Ausführungsform eines Melkbechers, der das Ventil beinhaltet, ist die Leitung so ausgebildet, dass ein Luft- und/oder Gasaustrittspunkt der Leitung in einem Bereich mit geringer Milchexposition positionierbar ist. In dieser Ausführungsvariante wird durch konstruktive Maßnahmen, d.h., durch die Geometrie und/oder die Abmessungen die Position des Austrittspunktes so festgelegt, dass einerseits in möglichst hohem Maße die vorteilhaften Auswirkungen einer Druckbeeinflussung beim Ableiten der Milch beim Melken erreicht werden, indem beispielsweise Außenluft in gesteuerter Weise in einen Milchableitungsbereich und dort an einer Stelle, die für einen gewünschten großen Druckgradient beim Abtransport des Milchpfropfens sorgt, eingeleitet wird. Andererseits wird jedoch ein möglicher negativer Einfluss der Leitung und des darin transportierten Gases dadurch möglichst gering gehalten, dass ein Ort mit reduzierter Milchexposition als Austrittsstelle der Leitung vorgesehen wird. Dabei ist ein Bereich bzw. ein Ort mit geringer Milchexposition so zu verstehen, dass während des Betriebs eines Melkbechers, d.h. insbesondere beim aktiven Melken, wenn also der Melkbecher an der Zitze des Milchtieres hängt, aber auch in Situationen, in denen der Melkbecher von der Zitze abgenommen aber in einer Schräglage weiterhin mit der Milchschlauch verbunden ist, in dem noch Restmilch, die bislang nicht abtransportiert wurde, in Verbindung steht, ergibt sich ein günstigeres Betriebsverhalten. Der Bereich mit geringer Milchexposition repräsentiert daher einen Ort, an welchem die Wahrscheinlichkeit eines "direkten" Einblasens von Luft und/oder Gas in turbulent strömende Milch oder auch ruhig strömende Mich reduziert ist. D.h., in beiden Situationen lassen sich Bereiche in dem Milchableitungsbereich und/oder auch in dem an den Melkbecher angrenzenden Teil eines Milchschlauchs identifizieren, in denen Milch mit deutlich geringerer Konzentration und/oder Häufigkeit vorhanden ist, als in den restlichen Bereichen des Milchableitungsbereichs oder des Milchschlauchs.

In der vorliegenden Ausführungsvariante wird nunmehr durch konstruktive Maßnahmen dafür gesorgt, dass der Luft- und/oder Gasaustritt in einem derartigen Bereich mit geringer Milchexposition erfolgt, so dass während des aktiven Melkens die Luft und/oder das Gas wirksam eingeführt werden, etwa zu Beginn der Entlastungsphase, um damit über den Milchpfropfen eine kurzzeitige Verringerung des Unterdrucks zu schaffen, so dass die Ableitung des Milchpfropfens in effizienter Weise erfolgen kann, wie zuvor erläutert ist. Andererseits wird ein direkter Kontakt mit dem Milchstrom weitestgehend vermieden, so dass nachteilige Auswirkungen, etwa Aufschäumen der Milch, klein gehalten werden. Als weiterer Vorteil ergibt sich, dass die Positionierung in einem Bereich mit geringer Milchexposition auch bewirkt, dass in anderen Situationen, etwa bei Schrägstellung des Melkbechers nach Abnahme von der Zitze und insbesondere bei angewinkelten Anschluss des Milchschlauchs an den Melkbecher, sich im Milchschlauch befindliche Milch vorzugsweise am tiefsten Punkt sammelt, der außerhalb dieses Bereichs liegt. Durch Auswahl der Position in einem Bereich mit geringer Milchexposition wird daher auch in dieser Situation ein Kontakt mit dem Luft- und/oder Gasaustrittspunkt der Leitung minimiert, so dass ein Eindringen der Restmilch in die Leitung gehemmt und schließlich die Gefahr einer Benetzung des Einlassventils reduziert wird. Im Falle der Verwendung des Einlassventils in Verbindung mit einem Melkbecher, der einen angewinkelten Anschluss zur Verbindung mit der Milchschlauch aufweist, kann eine Position in einem Bereich mit geringer Milchexposition so ausgewählt werden, dass etwa der Austrittspunkt der Leitung, die mit dem Einlassventil in Verbindung steht, zumindest außerhalb des in Längsrichtung des Melkbechers verlaufenden Teils des Milchableitungsbereichs positioniert wird und damit nicht unmittelbar in der Fallrichtung der ermolkenen Milch liegt. Insbesondere erstreckt sich in einigen Ausführungsformen der Luft- und/oder Gasaustrittspunkt der Leitung zuminderst 5 mm oder mehr in den angewinkelten Anschluss hinein oder ragt in anderen Ausführungsformen über den Anschlussstutzen des Melkbechers hinaus. Vorzugsweise liegt dabei zumindest der Luft- und/oder Gasaustrittspunkt der Leitung außermittig und ist in Bezug auf den Querschnitt des Anschlusses zum Anschluss des Milchschlauchs nach oben versetzt, so dass bei einem Milchfluss, der nicht den gesamten Querschnitt ausfüllt, eine hohe Wahrscheinlichkeit besteht, dass der Luft- und/oder Gasaustrittspunkt nicht mit dem Milchstrom in Kontakt ist.

In einer weiteren vorteilhaften Ausführungsform des Ventils ist ein Kraftübertragungselement zwischen dem Federelement und der elastischen Membran vorgesehen. Das Kraftübertragungselement stellt eine Komponente dar, die eine zuverlässige mechanische Kopplung des Federelements und der Membran ermöglicht und dabei aber einen direkten Kontakt des Federelements mit der Membran vermeidet. Auf diese Weise kann das Kraftübertragungselement so aufgebaut sein, dass es auf der einen Seite den Abmessungen und den Gegebenheiten des Federelements angepasst ist und auf der anderen Seite einen zuverlässigen und materialschonenden Kontakt mit der elastischen Membran ermöglicht. Vorzugsweise weisen das Kraftübertragungselement und/oder die elastische Membran ein Zentrierelement auf. Dadurch wird konstruktiv die korrekte Position des Kraftübertragungselements gewährleistet, ohne dass etwa bei der Montage oder Demontage des Einlassventils der richtigen Lage des Kraftübertragungselements Aufmerksamkeit zu widmen wäre. Die Zentrierung kann beispielsweise durch einen Zapfen an dem Kraftübertragungselement und einer komplementären Vertiefung in der Membran entsprechen, oder es kann ein umgekehrter Aufbau gewählt werden, in welchem die Membran einen Zapfen aufweist und eine komplementäre Vertiefung in dem Kraftübertragungselement vorgesehen ist.

In einer weiteren Ausführungsform ist ein durch Schnapprastung an dem Ventilkörper arretierbarer selbst positionierender Deckel vorgesehen. Der Deckel, der die Integrität der Komponenten im Inneren des Ventilkörpers schützt, ist so ausgebildet, dass eine rasche aber dennoch zuverlässige mechanische Arretierung erreicht wird. Die selbstpositionierende Eigenschaft des Deckels sorgt dafür, dass insbesondere beim Zusammenbau oder erneutem Zusammenbau, beispielsweise nach einer Reinigungsinspektion, kein großer Aufwand erforderlich ist, so dass auch in Situationen, in denen eine kurzfristige ungeplante Inspektion und gegebenenfalls Reinigung erforderlich sind, zumindest die Montage des Einlassventils in unkomplizierter Weise vorgenommen werden kann.

In einer weiteren Ausführungsform ist ein Sieb an dem Ventilkörper gegenüberliegend zu dem Deckel vorgesehen, das aus einem elastischen Material so hergestellt ist, dass damit auch eine erforderliche Dichtwirkung bei Ankopplung des Einlassventils an eine Reinigungsanlage erreicht wird. D.h., der Umfangsbereich ist als eine Dichtfläche ausgebildet.

In einer vorteilhaften Ausführungsvariante ist die Anzahl an individuellen Komponenten des Einlassventils, wenn dieses im betriebsbereiten Zustand ist, sieben oder kleiner, wobei in dieser Gesamtzahl die Leitung für den Luft- und/oder Gaseinlass nicht mit berücksichtigt ist. D.h., durch das erfindungsgemäße Einlassventil wird die Gesamtzahl an erforderlichen Komponenten deutlich reduziert im Vergleich zu konventionellen Einlassventilen, so dass aufgrund der geringeren Anzahl an Komponenten und der damit einhergehenden reduzierten gesamten Fertigungstoleranz, die sich beim Herstellen von individuellen Komponenten ergibt, ein gleichbleibendes Verhalten erreicht wird. Dies trägt in entscheidendem Maße zu einer Erhöhung der Betriebssicherheit bei und eröffnet auch die Möglichkeit, die Herstellungskosten insgesamt deutlich zu senken.

Gemäß einem weiteren Aspekt der vorliegenden Erfindung wird die zuvor genannte Aufgabe gelöst durch einen Melkbecher, der einen ersten Anschlussbereich aufweist, der mit einem Milchableitungsbereich in Strömungsverbindung steht oder zur Aufnahme und Führung des Milchableitungsbereichs dient, etwa wenn der Melkbecher zusätzliche Mittel zur Verbindung mit einer flexiblen Zitzenaufnahme hat und der erste Anschlussbereich lediglich eine Öffnung in der Melkbecherhülse und gegebenenfalls eine mechanische Führung für einen Milchschlauch oder einen verlängerten Bereich der elastischen Zitzenaufnahme bereitstellt. Ferner ist ein zweiter Anschlussbereich vorgesehen, der bei betriebsbereit installierter elastischer Zitzenaufnahme in dem Melkbecher mit dem zwischen einer Außenfläche der Zitzenaufnahme und einer Wandung des Melkbechers gebildeten Pulsationsraum in Strömungsverbindung steht. Der erfindungsgemäße Melkbecher weist ferner eine erste Öffnung mit einem darin aufgenommenen Einlassventil auf, wie es zuvor beschrieben ist oder wie es auch in der folgenden detaillierten Beschreibung beschrieben wird. Des Weiteren ist eine zweite Öffnung mit einer darin eingeführten Einlassleitung bzw. einer Leitung für einen von dem Einlassventil gesteuerten Luft- und/oder Gasstrom vorgesehen.

Der Melkbecher gemäß diesem Aspekt der vorliegenden Erfindung ist also ein Melkbecher, der in Verbindung mit dem hierin beschriebenen Einlassventil ausgestattet ist, so dass sich daraus die zuvor aufgeführten Vorteile im Hinblick auf einen gesteuerten Luft- und/oder Gaseinlass ergeben, wobei insbesondere eine erhöhte Betriebssicherheit, reduzierte Anschaffungskosten und eine erhöhte Qualität der ermolkenen Milch erreichbar sind. Dabei wird das erfindungsgemäße Einlassventil zusammen mit der Einlassleitung bzw. Leitung zur Verbindung des Einlassventils mit der Milchableitungsbereich betrieben, wobei der Austrittspunkt geeignet positionierbar ist. In einer besonders vorteilhaften Variante ist der Luft- und/oder Gasaustrittspunkt der Einlassleitung in einem Bereich mit geringer Milchexposition positioniert. Die sich daraus ergebenden Betriebseigenschaften und die Vorteile sind zuvor bereits erläutert.

In einer Variante ist der erste Anschlussbereich als ein angewinkelter Anschluss aus der Wandung herausgeführt und die Einlassleitung ist so vorgesehen, dass der Luft- und/oder Gasaustrittspunkt der Einlassleitung im Bereich des angewinkelten Anschlusses oder außerhalb des abgewinkelten Anschlusses des Melkbechers liegt. D.h., in dieser Ausführungsvariante mit angewinkeltem Anschluss für einen Milchschlauch wird die Positionierung des Luft- und/oder Gasaustrittspunkts so bewerkstelligt, dass eine geringe Milchexposition dadurch gewährleistet ist, dass der Luft- und/oder Gasaustrittspunkt zumindest in dem Bereich des angewinkelten Anschlusses oder darüber hinaus verlegt wird.

Vorzugsweise ist dabei die Einlassleitung so in dem angewinkelten Anschluss positioniert, dass der Luft- und/oder Gasaustrittspunkt außermittig nach oben in Bezug auf den Querschnitt des angewinkelten Anschlusses versetzt liegt. Wie bereits zuvor erläutert ist, ist somit in vielen Betriebssituationen gewährleistet, dass ein direkter Kontakt mit Milch möglichst vermieden wird, so dass in jedem Falle im Mittel der auf diese Weise positionierte Luft- und/oder Gasaustrittspunkt eine Position in einem Bereich mit geringer Milchexposition hat. Die sich daraus ergebenden Vorteile im Hinblick auf das Eindringen von Luft und/oder Gas in den Milchstrom und das Verhalten bei möglicherweise zurück strömender Milch, insbesondere bei Schrägstellung des Melkbechers, sind bereits zuvor in Verbindung mit dem Einlassventil erläutert.

In einer weiteren Ausführungsvariante ist der Luft- und/oder Gasaustrittspunkt der Einlassleitung so ausgebildet, dass er eine hemmende Wirkung für den Eintritt von Flüssigkeit hat. Auf diese Weise wird die Wahrscheinlichkeit eines Eindringens von Milch in gewissen Phasen, in denen möglicherweise ein Kontakt mit Milch besteht, reduziert, so dass auch die Gefahr eines Eindringens der Milch in das Einlassventil reduziert ist. Auf diese Weise kann die Betriebszuverlässigkeit des Einlassventils deutlich erhöht werden. Die hemmende Wirkung für Flüssigkeit kann durch geeignete Mittel in Form einer Lippendichtung, eines Federventils und dergleichen erreicht werden. In vorteilhaften Varianten ist dabei ein Teil der Leitung so ausgebildet, dass eine Verringerung der Strömungsgeschwindigkeit der austretenden Luft oder des Gases erreicht wird. Damit wird die mechanische Einwirkung auf die Milch gering gehalten, so dass die mit einer mechanischen Beaufschlagung der Milch einhergehenden negativen Wirkungen, die im einleitenden Teil beschrieben sind, möglichst klein gehalten werden. Auch die Tendenz zur Schaumbildung kann dadurch reduziert werden.

In einer weiteren vorteilhaften Ausführungsform ist der erste Anschlussbereich in Längsrichtung des Melkbechers angeordnet und die Einlassleitung ist gewinkelt ausgebildet, so dass ein Teil der Einlassleitung in Strömungsrichtung verläuft. D.h., in dieser Ausführungsvariante wird die Milch im Wesentlichen in Strömungsrichtung bzw. Längsrichtung des Melkbechers zumindest aus dem ersten Anschluss in den Milchschlauch abgeleitet und die Einlassleitung ist gewinkelt ausgebildet, so dass zumindest ein Teil der Einlassleitung in Strömungsrichtung verläuft und damit der Luft- und/oder Gasaustrittspunkt so positioniert ist, dass der Luft und/oder Gasaustritt in Strömungsrichtung der Milch erfolgt. Dadurch wird eine unerwünschte Verwirbelungen der Milchströmung deutlich unterdrückt. Ferner ist in vorteilhaften Varianten der dem Milchstrom ausgesetzte Teil der Einlassleitung strömungsgünstig geformt, so dass dadurch eine unnötige Beeinflussung der Milchströmung vermieden wird und der Luft- und/oder Gasaustritt in Strömungsrichtung eines im Wesentlichen nicht turbulent strömenden Milchstroms erfolgt. Auch auf diese Weise kann die positive Wirkung der Erhöhung der Druckdifferenz zwischen dem abfließenden Milchpfropfen und dem Betriebsunterdruck erreicht werden und der Einfluss auf einzelne Milchtröpfchen, d.h., "aufgeschäumte" Bereiche der Milch, durch Luft und/oder Gas wird reduziert.

In einer weiteren vorteilhaften Ausführungsform ist eine verschließbare Wartungsöffnung vorgesehen, die mit dem Milchableitungsbereich in Verbindung steht. Die Wartungsöffnung eröffnet also die Möglichkeit, schnell und einfach zumindest einen Teil des Milchableitungsbereichs zu inspizieren und gegebenenfalls zu reinigen, da sich dort häufig Fremdkörper ansammeln, die ein effizientes Ableiten der Milch verhindern. Beispielsweise werden bei einem Becherabfall oder auch in anderen Situationen, in denen bereits der Betriebsunterdruck an dem Melkbecher anliegt, d.h. zumindest die Saugwirkung aufgrund einer Vakuumpumpe vorhanden ist, Fremdstoffe angesaugt, die letztlich vorzugsweise an Positionen mit erhöhtem Strömungswiderstand in dem Milchableitungsbereich angesammelt werden. Diese Bereiche sind nunmehr einfach und rasch zugänglich, so dass insbesondere auch während des Betriebs eine Entfernung von Fremdkörpern möglich ist. Vorteilhafterweise ist die verschließbare Wartungsöffnung diesbezüglich so ausgebildet, dass sie ohne Werkzeug geöffnet und verschlossen werden kann. Insbesondere entfällt die zeitaufwändige Montage und Demontage des Melkbechers, insbesondere beim Melken von kleinen Wiederkäuern mit kurzer Melkdauer.

Wie bereits zuvor erläutert ist, wird durch das Einbringen von Luft und/oder Gas in das Milchableitungssystem die Effizienz beim Abtransport der Milch verbessert. Dabei ist die Einlassleitung so ausgebildet, dass, wie bereits zuvor erläutert ist, der Luft- und/oder Gasaustritt in einem Bereich erfolgt, der eine geringe Milchexposition besitzt. D.h., der Eintritt von Luft und/oder Gas in das Milchableitsystem findet nicht unmittelbar im Milchstrom selbst statt, sondern in einer "beruhigten" Zone, so dass insbesondere der direkte Kontakt von Luft und/oder Gas mit einzelnen Milchtröpfchen möglichst minimal gehalten wird. Andererseits ist auch der direkte Kontakt des Austrittspunkts der Einlassleitung mit Milch möglichst gering, so dass generell ein Eindringen von Milch in die Einlassleitung gehemmt wird.

Neben den zuvor dargelegten Vorteilen eines Luft- und/oder Gaseinlasses ergibt sich in Kombination mit dem Einlassventil ein gesteuerter Luft und/oder Gaseinlass, so dass insbesondere die günstige Wirkung zur Ableitung der Milch noch weiter erhöht wird, da temporär relativ große Mengen von Luft und/oder Gas eingebracht werden können, andererseits aber die gesamte Auswirkung im Hinblick auf die erforderliche Leistungszunahme einer Vakuumpumpe möglichst klein gehalten wird.

Das Einlassventil ist in einer Öffnung einer Melkbecherhülse des Melkbechers angeordnet, die mit einem Pulsationsraum in Verbindung steht. D.h., die Steuerung des Einlassventils erfolgt auf der Grundlage der Druckverhältnisse in dem Pulsationsraum, so dass insbesondere zwischen Saugphase und Entlastungsphase unterschieden werden kann.

In einer Variante ist ein Anschluss, der zur Ankopplung eines Milchschlauches vorgesehen ist, als ein angewinkelter Anschluss aus der Wandung herausgeführt und die Einlassleitung ist so vorgesehen, dass der Luft- und/oder Gasaustrittspunkt der Einlassleitung im Bereich des angewinkelten Anschlusses oder außerhalb des Melkbechers liegt. Wie zuvor erläutert ist, ist somit eine möglichst geringe Milchexposition des Luft- und/oder Gasaustrittspunkts gewährleistet.

Dabei kann der Luft- und/oder Gasaustrittspunkt außer mittig nach oben in Bezug auf den Querschnitt des angewinkelten Anschlusses angeordnet sein, so dass insbesondere bei nicht vollständig gefüllter Milchleitung aufgrund der Schwerkraftwirkung der Luft- und/oder Gasaustrittspunkt in einem Bereich mit geringer Milchexposition liegt. In diesem Zusammenhang ist der Begriff "oben" als absoluter Begriff, also mit der Erde als Bezugspunkt, zu verstehen.

In weiteren Ausführungsvarianten ist der Luft- und/oder Gasaustrittspunkt der Einlassleitung so ausgebildet, dass er eine hemmende Wirkung für den Eintritt von Flüssigkeit hat. D.h., es wird bereits durch konstruktive Maßnahmen erreicht, dass eine Rückströmung von Flüssigkeiten Richtung zum Eingang der Einlassleitung, an welchem sich ein steuerbares Einlassventil befinden kann, möglichst gehemmt wird. Die hemmende Wirkung für Flüssigkeit kann durch geeignete Mittel in Form einer Lippendichtung, eines Federventils und dergleichen erreicht werden. In vorteilhaften Varianten ist dabei ein Teil der Leitung, einschließlich der Austrittspunkts, so ausgebildet, dass eine Verringerung der Strömungsgeschwindigkeit der austretenden Luft oder des Gases erreicht wird. Damit wird die mechanische Einwirkung auf die Milch gering gehalten, so dass die mit einer mechanischen Beaufschlagung der Milch einhergehenden negativen Wirkungen, die im einleitenden Teil beschrieben sind, möglichst klein gehalten werden. Auch die Tendenz zur Schaumbildung kann dadurch reduziert werden.

In anderen Ausführungsvarianten ist ein Anschluss, der zur Ankopplung eines Milchschlauches vorgesehen ist, als ein in Längsrichtung des Melkbechers verlaufender Anschluss ausgebildet und die Einlassleitung ist gewinkelt, so dass ein Teil der Einlassleitung in Strömungsrichtung verläuft. Somit erfolgt die Einführung von Luft und/oder Gas zumindest in Strömungsrichtung der Milch. Auf diese Weise wird zumindest eine übermäßige aufschäumende Wirkung durch die Einführung von Luft und/oder Gas vermieden und auch ein Eindringen von Milch in die Einlassleitung wird höchst effizient unterdrückt.

In weiteren Beispielen, die nicht Teil der Erfindung sind, ist die eine Milchableiteinrichtung, die die zuvor genannten Komponenten des Melkbechers aufweist, als elastische Komponente, etwa als elastische Zitzenaufnahme, d.h., Zitzengummi, und/oder als elastische Ableitleitung ausgebildet, die in Verbindung mit einer Melkbecherhülse oder einem Melkbecher verwendet werden kann, und dabei aufgrund der effizienten Einleitung von Luft und/oder Gas in den Bereich mit geringer Milchexposition für die zuvor genannten Vorteile bei der Milchableitung unabhängig von der Bauart der verwendeten Becherhülse oder des verwendeten Melkbechers sorgt.

Weitere vorteilhafte Ausführungsformen ergeben sich aus den abhängigen Patentansprüchen und gehen auch deutlicher aus der folgenden detaillierten Beschreibung hervor, die in Verbindung mit den begleitenden Zeichnungen angegeben ist, in denen:
Figur 1a eine perspektivische Aufrissansicht eines Einlassventils gemäß einer Ausführungsform der vorliegenden Erfindung ist,
Figur 1b eine perspektivische Ansicht einer Leitung bzw. Einlassleitung ist, die zum Einlass von Luft und/oder Gas in einen Milchableitungsbereich eines Melkbechers dient,
Figur 2a eine perspektivische Ansicht eines Melkbechers zeigt, in welchem gemäß einer Ausführungsform der vorliegenden Erfindung ein erfindungsgemäßes Einlassventil zum gesteuerten Luft- und/oder Gaseinlass vorgesehen ist,
Figur 2b eine Schnittansicht des Melkbechers zeigt,
Figur 3a eine perspektivische Ansicht einer Milchableiteinrichtung in Form eines Melkbechers zeigt, in welcher eine Einlassleitung für Luft- und/oder Gaseinlass in einen Milchableitungsbereich vorgesehen ist, wobei der Austrittspunkt der Einlassleitung in einem Bereich mit geringer Milchexposition positioniert oder positionierbar ist,
Figur 3b eine Schnittansicht der Milchableiteinrichtung in Form des Melkbechers aus Figur 3a zeigt und
Figur 3c eine vergrößerte Ansicht eines Teils der Schnittansicht aus Figur 3b ist.

Mit Verweis auf die Zeichnungen werden nunmehr Ausführungsformen der Erfindung in größerem Detail beschrieben.

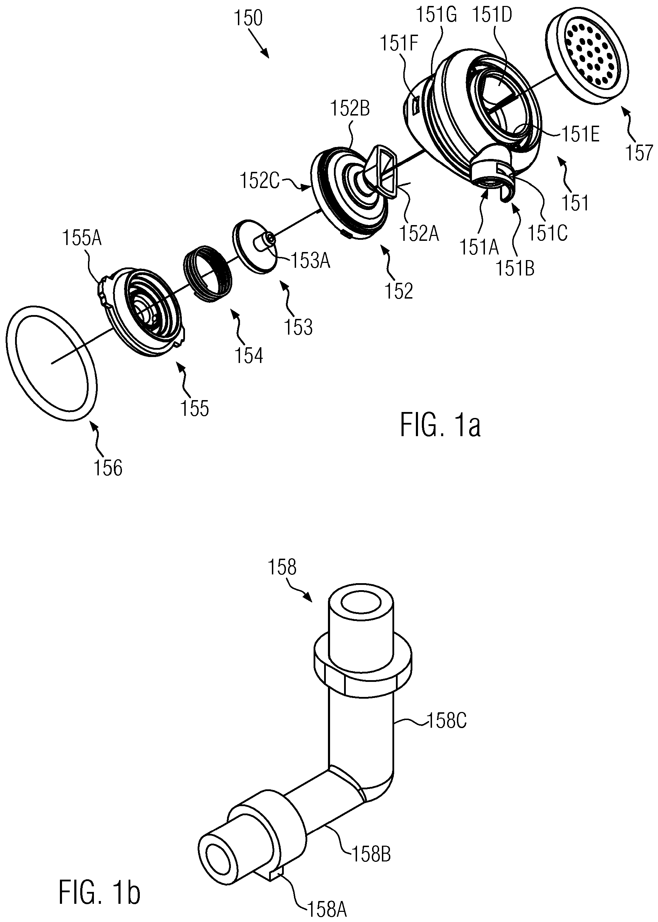

Figur 1a zeigt eine perspektivische Aufrissansicht eines Einlassventils 150 gemäß der vorliegenden Erfindung, das dazu geeignet ist, die Problematik der effizienten Milchableitung deutlich zu entschärfen, indem das Prinzip des gesteuerten Luft- und/oder Gaseinlasses umgesetzt wird in Verbindung mit einer Ventilanordnung, die hohe Betriebszuverlässigkeit, geringeren Herstellungsaufwand, verbesserte Reinigungsmöglichkeit und höhere Standzeit in Verbindung mit gesteigerter Milchqualität ermöglicht.

Das Einlassventil 150 umfasst einen Ventilkörper 151, der aus einem geeigneten Material hergestellt ist und einen Strömungskanal 151A aufweist, der steuerbar geöffnet und geschlossen werden kann. Der Strömungskanal 151A mündet in einer Dichtfläche 151E, die bis auf die Einmündung des Kanals 151A in ähnlicher Weise ausgebildet und geformt ist, wie eine dazu gegenüberliegende Fläche 151D. Im Hinblick auf die Flächen 151E, 151D gilt, dass sie eine beliebige Größe und Form haben können, solange ein Anliegen eines Dichtkörpers zum Verschließen des Strömungskanals 151A gewährleistet ist.

Das Ventil 150 umfasst ferner eine elastische Membran 152, die auf einer Seite 152C in Verbindung mit einem Pulsationsraum eines Melkbechers steht und auf der anderen Seite 152B einen Dichtkörper 152A aufweist, der entsprechend ausgebildete Flächen besitzt, um insbesondere im Zusammenwirken mit der Dichtfläche 151E den Strömungskanal 151A verschließen und bei Bedarf wieder öffnen zu können. Der Dichtkörper 152A ist ein Bestandteil der Membran 152 und ist in Ausführungsformen aus dem gleichen Material hergestellt. In einer weiteren Ausführungsform sind Membran 152 und Dichtkörper 152A als einstückige Komponente ausgebildet. Der Dichtkörper 152A kann aufgrund seiner Eigenelastizität in den Ventilkörper 151 eingepasst werden und ist somit zugleich ein Befestigungselement, das die Membran 152 zuverlässig in dem Ventilkörper 151 positioniert und hält. Ferner ist auf Grund der besonderen Form des Dichtkörpers 152A und der dazu angepassten Flächen 151D und 151E eine präzise Positionierung des Dichtkörpers 152A gewährleistet.

Das Ventil 150 umfasst ferner ein Kraftübertragungselement 153, das mit der Membran 152 in mechanischem Kontakt ist und auf der dazu gegenüberliegenden Seite mit einem Federelement 154 in Verbindung steht, so dass über das Kraftübertragungselement 153 das Federelement 154 die Membran 152 und damit den Dichtkörper 152A so vorspannen kann, dass ohne weitere zusätzliche Kräfte auf den Dichtkörper 152A der Strömungskanal 151A geöffnet wird, so dass eine mit dem Inneren des Ventilkörpers 151 in Verbindung stehende Gasquelle, beispielsweise die Außenluft, durch den Strömungskanal 151A mit einer Leitung in Verbindung ist, die an einem Anschluss 151B mithilfe eines Verriegelungselements 151C anzubringen ist, wie nachfolgend in Verbindung mit Figur 1b erläutert ist.

Das Kraftübertragungselement 153 ist in einer Ausführungsform so ausgebildet, dass ein Zentrierelement 153A vorgesehen ist, das bei Kopplung des Verbindungselements 153 mit der Membran 152 dafür sorgt, dass eine genaue Zentrierung bzw. Positionierung erfolgt. Dazu ist in der gezeigten Ausführungsform das Zentrierelement 153A als ein Zapfen ausgebildet, der in eine komplementäre Vertiefung in der Membran 152 (nicht gezeigt) eingreifen kann, so dass automatisch die richtige Positionierung zwischen Element 153 und Membran 152 gewährleistet ist. Das Federelement 153A und ein entsprechendes komplementäres Element in der Membran 152 können eine beliebige Gestalt besitzen, solange die zentrierende Wirkung erreicht wird. Vorzugsweise ist die Größe des Kraftübertragungselements 153 so festgelegt, dass sie an die Größe, d.h. den Durchmesser, des Federelements 154, das in der gezeigten Ausführungsform als eine Spiralfeder vorgesehen ist, angepasst ist. Dazu kann eine entsprechende Nut vorgesehen sein, die beispielsweise die Feder 154 aufnimmt. Es sollte beachtet werden, dass das Federelement 154 auch in Form anderer Elemente vorgesehen werden kann, die aufgrund ihrer elastischen Wirkung ein Vorspannen der Membran 152 mit der erforderlichen Kraft ermöglichen. Bei einer Spiralfeder kann die zum Vorspannen erforderliche Kraft einfach durch die Geometrie und/oder Materialart, und der gleichen vorgegeben werden, so dass sich die erforderliche Kraft zum Vorspannen dadurch einstellbar und auf die vorhandenen Bedingungen anpassbar ist.

Das Ventil 150 umfasst ferner einen Deckel 155, der mit entsprechenden Vorsprüngen 155A versehen ist, die einerseits in Verbindung mit entsprechenden Verriegelungsöffnungen 151F, die an dem Ventilkörper 151 ausgebildet sind, ein Verschließen durch Schnapprastung des Ventilkörpers 151 ermöglichen, andererseits ein Abnehmen des Deckels 155 durch Drehung, gegebenenfalls mit einem geeigneten Werkzeug, ermöglichen. D.h., insbesondere ist der Zusammenbau des Ventils 150 durch einfaches Aufdrücken und Einrasten des Deckels 155 möglich, während ein ungewolltes Öffnen des Ventils 150 nicht möglich ist und einen bewussten Demontagevorgang voraussetzt, so dass eine hohe Zuverlässigkeit während des Betriebs des Ventils 150 gewährleistet ist.

Ferner ist ein Dichtelement 156, beispielsweise ein O-Ring vorgesehen, der mit einer entsprechenden Nut 151G des Ventilkörpers 151 im Eingriff ist.

Bei Bedarf ist ein Filterelement 157 auf dem Ventilkörper 151 anbringbar, um beispielsweise bei Ansaugung von Außenluft das Eindringen von Fremdkörpern zu unterdrücken.

Das Ventil 150 ist im zusammengebautem Zustand und nach Montage an einem Melkbecher so aufgebaut, das mittels des Dichtelements 156 ein gasdichter Abschluss der Melkbecher gewährleistet ist, der in seiner Hülse eine geeignete Öffnung aufweist, um den Ventilkörper 151 aufzunehmen. Über den gasdurchlässigen Deckel 155, der beispielsweise entsprechende Bohrungen aufweist, steht die Seite 152C der Membran 152 mit dem Pulsationsraum des Melkbechers in Verbindung, so dass bei nahezu gleichen Druckverhältnissen zwischen Außenatmosphäre und Pulsationsraum die Vorspannung durch das Federelement 154, die über das Kraftübertragungselement 153 auf die Membran 152 und schließlich auf den Dichtkörper 152A übertragen wird, dazu führt, dass dessen Dichtfläche sich von der Dichtfläche 151E abhebt, so dass der Strömungskanal 152A geöffnet ist. Dadurch wird eine Verbindung zwischen dem Inneren des Ventilkörpers 151, das jedoch durch die Membran 151 von dem Pulsationsraum abgetrennt ist, und dem Strömungskanal 151A hergestellt. Das Innere des Ventilkörpers 151 kann mit einer geeigneten Gasquelle, etwa der Außenluft, in Verbindung stehen, so dass sich ein Strömungsweg von der Gasquelle in den Strömungskanal 151A ergibt.

Figur 1b zeigt eine perspektivische Ansicht einer Leitung bzw. Einlassleitung 158, die an den Strömungskanal 151A anschließbar ist. Dazu hat ein Anschluss 151B des Ventilkörpers 151 (siehe Figur 1a) geeignete Abmessungen, um beispielsweise einen Leitungsbereich 158B aufzunehmen. In einer bevorzugten Ausführungsvariante ist an dem Leitungsbereich 158B ein Verriegelungselement 158A vorgesehen, das dafür sorgt, dass die Leitung 158 zuverlässig an dem Anschluss 151B gehalten wird. Dazu ist beispielsweise ein komplementäres Verriegelungselement 151C (siehe Figur 1a) an dem Ventilkörper 151 vorgesehen, das in Verbindung mit dem Verriegelungselement 158A der Leitung 158 eine rasche aber dennoch zuverlässige Verbindung der beiden Komponenten gewährleistet. Beispielsweise ist das Verriegelungselement 158A als ein entsprechend ausgebildeter elastischer Vorsprung vorgesehen, während das Verriegelungselement 151C des Ventilkörpers 151 als eine entsprechende Öffnung ausgebildet ist.

Die Einlassleitung bzw. Leitung 158 umfasst ferner einen zweiten Leitungsabschnitt 158C, der gegebenenfalls einen anderen Durchmesser im Vergleich zu dem Leitungsabschnitt 158B aufweist, um beispielsweise die Strömungsgeschwindigkeit der Luft und/oder des Gases darin entsprechend zu reduzieren. Der Leitungsabschnitt 158C ist so ausgebildet, dass er den Austritt von Luft und/oder Gas an einer gewünschten Position im Milchableitungsbereich eines Melkbechers ermöglicht und dabei die mechanische Einwirkung auf die Milch gering hält.

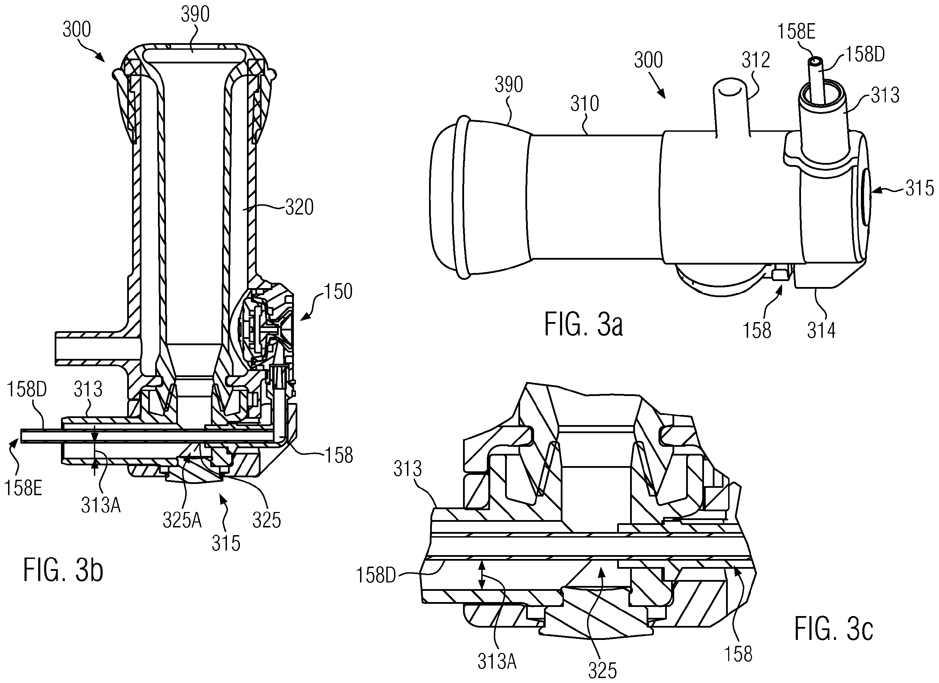

Wie nachfolgend in Verbindung mit den Figuren 3 ausführlicher erläutert ist, weist in besonders vorteilhaften Ausführungsformen die Leitung 158 einen Aufbau auf, durch den der Austritt von Luft und/oder Gas aus der Leitung 158 in einem Bereich mit geringer Milchexposition erfolgt, so dass sich die zuvor genannten Vorteile zusätzlich zu einem durch das Einlassventil gesteuerten Luft- und/oder Gaseinlass ergeben. Eine hemmende Wirkung für das Zurückströmen von Flüssigkeit kann durch geeignete Mittel am Leitungsabschnitt 158C in Form einer Lippendichtung, eines Federventils und dergleichen erreicht werden.

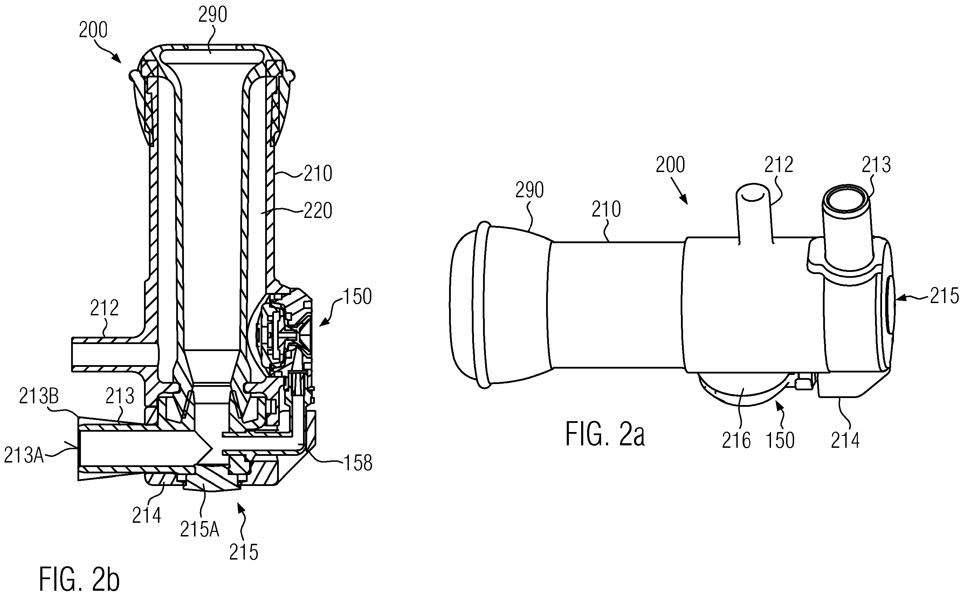

Figur 2a zeigt eine perspektivische Ansicht eines Melkbechers 200 gemäß der vorliegenden Erfindung, in welchem das Einlassventil 150 verwendet ist, um die zuvor geschilderte Problematik bei der Milchableitung zu entschärfen. Wie gezeigt, umfasst der Melkbecher 200 eine Becherhülse 210, die in Form und Abmessungen an jeweilige Erfordernisse des betrachteten Melkprozesses angepasst ist. Beispielsweise ist die Becherhülse 210 so vorgesehen, dass sie für das Melken kleiner Milchtiere, etwa von Schafen oder Ziegen, und dergleichen geeignet ist. In anderen Ausführungsvarianten ist die Becherhülse 210 so ausgebildet, dass sie für Kühe oder andere relativ große Milchtiere geeignet ist. Die Becherhülse 210 weist eine geeignete Öffnung 216 auf, die zum Einpassen des Einlassventils 150 geeignet gestaltet ist. Ferner ist ein erster Anschlussbereich 213, der hier in Form eines Anschlusses zur Aufnahme eines Milchschlauchs gezeigt ist, vorgesehen, der in der gezeigten Ausführungsform mit einem Milchableitungsbereich in Strömungsverbindung steht. In anderen Varianten ist der erste Anschlussbereich als eine Öffnung zur Aufnahme eines Milchschlauchs oder einem Leitungselement und dessen Führung ausgebildet. Ein Milchableitungsbereich ist generell als ein Bereich des Melkbechers 200 zu verstehen, der mit einem Betriebsunterdruck beaufschlagt ist, und in welchem zumindest lokal beim Melken Milch vorhanden ist. Beispielsweise ist der Anschluss 213 in Strömungsverbindung mit einem entsprechenden Stutzen (in Figur 2b gezeigt), der wiederum in Strömungsverbindung mit dem Inneren einer elastischen Zitzenaufnahme 290 steht, die an der Hülse 210 entsprechend befestigt ist und die "Schnittstelle" zwischen Melkanlage und Zitze des Tieres darstellt.

Ein zweiter Anschlussbereich 212 ist so vorgesehen, dass er mit einer Pulsationsleitung verbunden werden kann. Wie ferner gezeigt ist, ist eine Schutzkappe 214 vorgesehen, die Bereiche des Melkbechers 200 und insbesondere die Leitung des Einlassventils 150 schützt, wie nachfolgend detaillierter in Figur 2b gezeigt ist. Des Weiteren ist eine verschließbare Wartungsöffnung 215 an der Unterseite des Melkbechers 200 vorgesehen.

Figur 2b zeigt eine Schnittansicht des Melkbechers 200, wobei erkennbar ist, dass der zweite Anschluss 212 mit einem durch die Außenfläche der elastischen Zitzenaufnahme 290 und einer Wandung der Becherhülse 210 gebildeten Pulsationsraum 220 in Verbindung steht. Das heißt, durch Hervorrufen unterschiedlicher Druckzustände in dem Pulsationsraum 220 kann die Form der Zitzenaufnahme 290 beeinflusst werden, um das im einleitenden Teil beschriebene pulsierende Melken zu erreichen. D.h., wenn im Inneren der Zitzenaufnahme 290, wenn diese durch die Zitze des zu melkenden Tieres "nach oben abgedichtet" ist, der Betriebsunterdruck ansteht, kann durch Erzeugen des Betriebsunterdrucks in dem Pulsationsraum 220 die in der Figur 2b dargestellte Form der Zitzenaufnahme 290 hergestellt werden, da im Inneren der Aufnahme 290 und im Pulsationsraum 220 nahezu gleiche Druckbedingungen herrschen und die Eigenelastizität der Aufnahme 290 für die dargestellte nicht eingefaltete Form sorgt. Wenn andererseits der Unterdruck im Pulsationsraum 220 reduziert wird oder ein Druck gleich dem Außendruck oder ein Überdruck hervorgerufen wird, ergibt sich eine Differenz zwischen dem Inneren der Zitzenaufnahme 290 und dem Pulsationsraum 220, so dass eine Verformung eintritt, die hierin auch als Einfaltung bezeichnet wird. Auf diese Weise wird der Milchfluss aus der Zitze des Tieres durch die Einfaltung zumindest gehemmt und die gewünschte pulsierende Wirkung mit Massage erreicht.

Das erfindungsgemäße Einlassventil 150 steht mit dem Pulsationsraum 220 in Verbindung, so dass schließlich die darin herrschenden Bedingungen auch an der Rückseite 152C der Membran 152 anliegen. Bei Unterdruck im Pulsationsraum 220 wird gegen die Kraft des Federelements 154 die Membran nach innen gesaugt und somit wird der Strömungskanal 151A geschlossen (Figur 1a), so dass Milch über das Innere der Zitzenaufnahme 290 entsprechend in einen Stutzen, der mit der Aufnahme 290 in Verbindung ist, abläuft und schließlich an dem Anschluss 213 in einen nicht gezeigten Milchschlauch eintritt. Wenn andererseits ein Milchabfluss aus der Zitze durch die Einfaltung der Aufnahme 290 im Wesentlichen unterbrochen wird, da nunmehr durch den Pulsationsraum 220 herrschenden Druck die Einfaltung der Aufnahme 290 erzwungen wird, ist keine Saugwirkung an der Membran des Ventils 150 vorhanden und durch die Eigenelastizität und insbesondere durch die Vorspannung des Federelements 154 (Figur 1a) wird der Strömungskanal 151A geöffnet, so dass Außenluft über den Strömungskanal in den Milchableitungsbereich eingeführt wird. Daher wird in dieser Phase der Unterdruck in dem Milchableitungsbereich, der sich ansonsten über einem sich ausbildenden Milchpfropfen erhöhen würde, reduziert. Dadurch wird eine größere Druckdifferenz zum Abtransport der Milch hervorgerufen, wie dies auch zuvor erläutert ist. D.h., der absolute Druck unter der Zitze, also über dem Milchpfropfen, wird durch den Lufteinlass angehoben, der Unterdruck wird also kleiner, und somit kann der Milchpfropfen effizienter aufgrund des Betriebsunterdrucks der auf der von der Zitze abgewandten Seite des Milchpfropfens herrscht, abfließen. Die Menge der zugeführten Außenluft kann effizient durch konstruktive Maßnahmen eingestellt werden, etwa die Größe des Strömungskanals und dergleichen. Nach einem erneuten Druckwechsel in dem Pulsationsraum 220 wird der Strömungskanal des Ventils 150 wieder zuverlässig geschlossen. Wie zuvor erläutert ist, ergibt sich aufgrund des erfindungsgemäßen Aufbaus des Einlassventils 150 ein hohes Maß an Betriebszuverlässigkeit des Ventils 150 und damit ergeben sich konstanter Weise verbesserte Bedingungen beim Abtransport der Milch, wodurch Effizienz des Melkvorgangs und Qualität der Milch verbessert werden. Es sollte beachtet werden, dass bei Bedarf auch eine Gasquelle mit dem Einlassventil 150 verbunden werden und so statt Luft oder zusätzlich zur Außenluft ein anderes Gas eingeleitet werden kann.

Wie ferner gezeigt ist, ist die Wartungsöffnung 215 vorgesehen, die bevorzugter Weise ohne Werkzeug zu öffnen und zu verschließen ist und Zugang zu dem Milchableitungsbereich, beispielsweise an der Kreuzung zwischen der Milchableitung in Längsrichtung des Melkbechers 200 und dem angewinkelten Anschluss 213, ermöglicht, so dass sich dort ansammelnde Fremdkörper in einfacher Weise auch während des Melkvorgangs durch kurzzeitiges Öffnen der Wartungsöffnung 215 entfernen lassen.

In einer vorteilhaften Ausführungsform ist der Anschluss 213 so gebildet, dass bei Anschluss eines Milchschlauchs ein zuverlässiger Sitz des Milchschlauchs erreicht wird, indem etwa ein sich nach außen vergrößernder Außendurchmesser 213B vorgesehen ist, so dass auch bei Auftreten von Zugkräften auf einen am Anschluss 213 angekoppelten Milchschlauch ein zuverlässiger Sitz gewährleistet ist.

Wie ferner gezeigt ist, ist das Schutzelement 214, beispielsweise in Form einer Schutzkappe vorgesehen, die insbesondere dazu dient, den Melkbecher auf der Unterseite vor Stößen zu schützen und insbesondere auch dafür sorgt, dass die Leitung 158 vor äußeren Einflüssen weitestgehend geschützt ist. Dadurch wird eine erhöhte Zuverlässigkeit in Verbindung mit dem an dem Ventil 150 verriegelten Anschluss der Leitung 158 gewährleistet.

Figur 3a zeigt eine perspektivische Ansicht einer Milchableiteinrichtung, die hier in Form eines Melkbechers gemäß der vorliegenden Erfindung bereitgestellt ist. Die Milchableiteinrichtung in Form eines Melkbechers 300 weist eine Becherhülse 310, eine elastische Zitzenaufnahme 390, einen ersten Anschlussbereich 313 in Form eines Anschlusses und einen zweiten Anschlussbereich in Form eines Anschlusses 312 aus. Für die Becherhülse 310, den ersten Anschluss bzw. Anschlussbereich 313 und den zweiten Anschluss bzw. Anschlussbereich 312 gelten im Wesentlichen die gleichen Aspekte, wie sie zuvor für die entsprechenden Komponenten des Melkbechers 200 erläutert sind. Ferner ist eine Wartungsöffnung 315 vorgesehen in Verbindung mit einer Schutzkappe 314, wobei auch für diese Komponenten die gleichen Kriterien gelten, wie sie bereits zuvor in Verbindung mit dem Melkbecher 200 erläutert sind. Ferner ist eine Einlassleitung 158, die etwa der in Verbindung mit dem Einlassventil 150 beschriebenen Leitung 158 entspricht, vorgesehen, um Luft und/oder Gas kontinuierlich oder periodisch einzuführen.

Figur 3b zeigt eine Schnittansicht des Melkbechers 300. Wie gezeigt, steht der erste Anschluss 313, der angewinkelt zur Längsrichtung des Melkbechers 300 vorgesehen ist, über einen entsprechenden Anschlussstutzen mit der Zitzenaufnahme 390 in Verbindung. Ferner ist ein Einlassventil vorgesehen, das beispielsweise mit einem Pulsationsraum 320, der in ähnlicher Weise bereits in Verbindung mit dem Melkbecher 200 als Pulsationsraum 220 beschrieben ist, in Verbindung steht.

In anderen Beispielen, die nicht Gegenstand der Erfindung sind, ist ein Einlassventil nicht vorgesehen, und die Leitung 158 ist beispielsweise über geeignete Öffnungen, Filter, und dergleichen mit der Außenluft oder einer anderen Gasquelle verbunden. Die Leitung 158 ist so ausgebildet, dass ein Leitungsabschnitt 158D vorgesehen ist, der einen Luft- und/oder Gasaustrittspunkt 158E bildet, der in einem Bereich mit reduzierter Milchexposition angeordnet ist. In der dargestellten Ausführungsform ergibt sich die Positionierung in einem Bereich mit geringer Milchexposition dadurch, dass der Leitungsabschnitt 158D der Leitung 158 so vorgesehen ist, dass er sich zumindest in den Anschluss 313 erstreckt und in einer vorteilhaften Variante über den Anschluss 313 hinaus ragt. Auf diese Weise wird erreicht, dass der Austrittspunkt 158E in einem Bereich liegt, in welchem bereits eine beruhigte Strömung der Milch stattfindet, so dass davon auszugehen ist, dass größere Turbulenzen in der Nähe des Austrittspunktes 158E nicht mehr vorhanden sind, und somit ein direkter Kontakt mit einzelnen Milchtröpfchen stark reduziert ist. In der dargestellten Ausführungsform wird ferner die Anordnung des Austrittspunktes 158E in dem Bereich mit geringer Milchexposition dadurch erreicht, dass der Austrittspunkt 158E und gegebenenfalls auch ein mehr oder minder großer Teil des Leitungsabschnitts 158D in Bezug auf den Querschnitt des Anschlusses 313 außermittig geführt und nach oben versetzt sind.

In der gezeigten Darstellung befindet sich der Melkbecher 300 in einer im Wesentlichen vertikalen Stellung, wobei die Zitzenaufnahme 390 mit einer Zitze in Verbindung zu bringen ist. Beim Abfließen der Milch wird sich daher die Milch im Wesentlichen im unteren Bereich des Anschlusses 313 aufgrund der Schwerkraft aufhalten, wenn der Milchfluss nicht so hoch ist, dass der gesamte Querschnitt des Anschlusses 313 mit Milch ausgefüllt ist. Da somit die Milch in dem Anschluss 313 und damit auch in dem mit dem Anschluss 313 zu verbindenden Milchschlauch (nicht gezeigt) fließt, befindet sich der Austrittspunkt 158E außerhalb des eigentlichen Milchstroms, so dass zumindest durch den Einlass von Luft und/oder Gas keine Aufschäumung der Milch bewirkt wird. Andererseits wird aber auch ein Eindringen von Milch in den Eintrittspunkt 158E durch seine Position im Bereich mit geringer Milchexposition gehemmt. D.h., da in vielen Betriebsphasen ein direkter Kontakt des Austrittspunktes 158E mit dem Milchstrom verhindert wird, findet auch ein direkter Kontakt mit der Milch nur mit geringer Wahrscheinlichkeit statt. Insbesondere wird durch die Positionierung des Austrittspunktes 158E ein Kontakt mit Milch deutlich unterdrückt in Situationen, in denen beispielsweise der Melkbecher 300 in Bezug auf die dargestellte vertikale Lage beispielsweise nach rechts um etwa 30-60° gekippt ist, was beispielsweise nach Abnahme des Melkbechers 300 von der Zitze hervorgerufen werden kann. Auch in dieser Lage des Melkbechers sammelt sich die Restmilch eines Milchableitungsbereichs 325 im Wesentlichen dann in der Nähe des tiefsten Punktes 325A, so dass der Austrittspunkt 158E im Wesentlichen nicht mit Restmilch benetzt wird, die ansonsten in der Leitung 158 zurückströmen und schließlich aus dem Melkbecher 300 austreten könnte.

Die Leitung 158 steht mit dem in einem Bereich mit geringer Milchexposition angeordneten Austrittspunkt 158E mit einem Einlassventil in Verbindung, so dass ein gesteuertes Einleiten von Luft und/oder Gas möglich ist, so dass sich durch das periodische Einbringen von Luft und/oder Gas die Vorteile erreichen lassen, die zuvor in Verbindung mit einem periodischen Lufteinlass beschrieben sind. Andererseits wird durch die geeignete Positionierung des Austrittspunktes 158E erreicht, dass eine Einwirkung auf die direkte Strömung der Milch, was zur Ausbildung von Turbulenzen und einem Aufschäumen der Milch beitragen könnte, nahezu vermieden wird und gleichzeitig eine Kontamination eines entsprechenden Einlassventils durch beispielsweise zurück strömende Milch gering bleibt.

Es sollte angemerkt werden, dass der Austrittspunkt 158E durch strukturelle Maßnahmen in geeigneter Weise so ausgebildet werden kann, das generell eine für den Eintritt von Flüssigkeit hemmende Wirkung für die Leitung 158 entsteht. Beispielsweise können entsprechende Mittel, beispielsweise elastische Lippen, usw., am Austrittspunkt 158E vorgesehen werden, die den Austritt von Luft und/oder Gas zulassen, einer in den Austrittspunkt hineinströmenden Flüssigkeit jedoch einen deutlich erhöhten Strömungswiderstand bieten. Auch andere Maßnahmen, etwa Verändern der Querschnittsformen und/oder der Querschnittsgröße des Austrittspunkts 158E, und dergleichen können genutzt werden, um die Rückströmung einer Flüssigkeit zu hemmen. Auch die Austrittsgeschwindigkeit von Luft und/oder Gas kann dabei geeignet reduziert werden, indem der Querschnitt zumindest des Abschnitts 158D vergrößert wird und/oder durch andere geeignete Mittel, die in vorteilhaften Varianten gleichzeitig eine Rückströmung von Flüssigkeit verhindern.

Erfindungsgemäß ist die Einlassleitung 158 in Verbindung mit dem erfindungsgemäßen Einlassventil 150 vorgesehen, das zuvor beschrieben ist, so dass hier eine deutliche Verbesserung aufgrund der synergetischen Wirkungen der einzelnen Komponenten erreicht wird.

Ferner gelten im Hinblick auf den Anschluss 313, die Wartungsöffnung 315, die Schutzkappe 314, und dergleichen die gleichen Kriterien, wie sie auch zuvor in Verbindung mit dem Melkbecher 200 erläutert sind.

Es sollte beachtet werden, dass in nicht gezeigten Ausführungsformen der Anschluss 313 im Wesentlichen in der Längsrichtung des Melkbechers 300 verlaufen kann, so dass sich bei senkrechter Stellung ein nahezu senkrechter Abfluss der Milch aus der Zitzenaufnahme 390 ergibt. In diesen Ausführungsformen ist die Einlassleitung 158 so vorgesehen, dass zumindest der Leitungsabschnitt 158D so angewinkelt ist, dass er in Strömungsrichtung verläuft, so dass der Austritt von Luft und/oder Gas aus der Leitung 158 und damit der Eintritt in den Milchschlauch oder den Milchableitungsbereich 325 in Strömungsrichtung der Milch erfolgt und somit auch eine negative Auswirkung auf das Strömungsverhalten der Milch klein gehalten wird. D.h., auch in dieser Gestaltung eines Melkbechers, d.h. der Anschluss 313 ist eine geradlinige Fortsetzung der Zitzenaufnahme 390 kann der Lufteinlass bzw. Gaseinlass ohne große Störung des Milchstroms erfolgen. Dabei ist der Leitungsabschnitt 158D bevorzugter Weise so gestaltet, dass er sich zumindest 5 mm und in anderen Ausführungsformen mehr als 10 mm, in weiteren Ausführungsformen mehr als 20 mm in Strömungsrichtung, d.h. in Figur 3b der vertikalen Richtung, erstreckt. Gleiche Strecken gelten auch für den horizontal ausgerichteten Leitungsabschnitt 158D, der, wie bereits erwähnt, sich in vorteilhaften Ausführungsformen auch über den Anschluss 313 hinaus erstreckt.

Figur 3c zeigt eine vergrößerte Ausschnittsansicht, in welcher die außermittige Positionierung des Leitungsabschnitts 158D, angedeutet durch den Abstand 313A von der unteren Innenwand des Anschlusses 313, dargestellt ist. Wie zuvor beschrieben ist, wird aufgrund dieser Positionierung des Leitungsabschnitts 158D und damit der Positionierung des Austrittspunkts 158E (siehe Figur 3b) sichergestellt, dass bei dieser angewinkelten Anordnung des Anschlusses 313 der Austrittspunkt 158E in einem Bereich mit geringer Milchexposition angeordnet ist. D.h., zumindest ein Teil des Leitungsabschnitts 158D verläuft in dem Milchableitungsbereich 325 innerhalb des Anschlusses 313 in der dargestellten Position, so dass, auch wenn der Leitungsabschnitt 158D in dem Anschluss 313 endet und somit der Austrittspunkt 158E innerhalb des Anschlusses 313 liegt, eine Positionierung in einem Bereich mit geringer Milchexposition gewährleistet ist.

In weiteren Beispielen ist die Milchableiteinrichtung beispielsweise als eine elastische Komponente, etwa in Form der elastischen Zitzenaufnahme 390 vorgesehen, die gegebenenfalls geeignete elastische Schlauchelemente aufweist, um die Strömungsverbindung zwischen der Zitze eines Milchtieres und einer Milchleitung zu gewährleisten. Die Milchableiteinrichtung kann dabei in Form eines Melkbechers, etwa des Melkbechers 300, ausgebildet sein oder kann Bestandteil eines derartigen Melkbechers sein, so dass die zuvor ausgeführten Erläuterungen in gleicher Weise auch für den Fall zu treffen, in welchem die Milchableiteinrichtung als elastische Komponente, etwa als Zitzenaufnahme bzw. Zitzengummi 390 vorgesehen ist. In diesem Falle wird die Einlassleitung 158 so vorgesehen, dass der Luft-und/oder Gasaustrittspunkt 158E in dem Bereich mit geringer Milchexposition in einem entsprechenden Schlauchstück angeordnet werden kann, so dass die zuvor genannten Vorteile erreicht werden. In diesem Falle kann die Milchableiteinrichtung mit einem beliebigen Melkbecher kombiniert werden oder kann Bestandteil eines derartigen Melkbechers sein. Es ist nur vorausgesetzt, dass die Milchableiteinrichtung in geeigneter Weise in eine entsprechende Melkbecherhülse eingesetzt oder mit dem Melkbecher in geeigneter Weise verbunden werden kann, wenn etwa die Milchableiteinrichtung in Form eines Milchschlauchbereichs vorgesehen ist. Beispielsweise wird die Einlassleitung 158 so an einer elastischen Zitzenaufnahme und/oder einem Milchschlauchbereich angeordnet, dass einerseits Außenluft und/oder ein gewünschtes Gas in die Einlassleitung 158 eingespeist werden können und andererseits zumindest der Leitungsbereich 158D so verlegt und dimensioniert ist, dass der Austrittspunkt 158E in der Zone mit geringer Milchexposition positioniert ist. Dazu ist gegebenenfalls eine geeignete Halterung (nicht gezeigt) vorzusehen, um die Einlassleitung 158 in geeigneter Weise zu positionieren und zu fixieren, um damit eine präzise Positionierbarkeit des Leitungsbereichs 158D und damit des Austrittspunkts 158E zu gewährleisten. Die Einlassleitung 158 ist mit einem Lufteinlassventil kombiniert, das an einer geeigneten Stelle positioniert wird, um einen periodischen Luft-und/oder Gaseinlass zu ermöglichen, wie dies auch zuvor bereits beschrieben ist. Auf diese Weise wird ein hohes Maß an Flexibilität bei der Gestaltung und der Positionierung der Milchableiteinrichtung ermöglicht.

Generell ermöglichen es die hierin angegebenen Mittel, die Effizienz beim Melken zu erhöhen und auch die Qualität der Milch zu steigern.

## Patentansprüche

1. Einlassventil (150) für einen Melkbecher (200, 300) zum gesteuerten Einlass von Luft und/oder Gas in einen Milchableitungsbereich des Melkbechers (200, 300), mit einem Ventilkörper (151) mit einem steuerbaren Strömungskanal (151A), der an einer Dichtfläche (151E) mündet,
einer elastischen Membran (152), die auf einer ersten Seite mit in einem Pulsationsraum des Melkbechers vorherrschenden Druck beaufschlagbar ist und auf einer zweiten Seite einen mit der Membran als Einheit aufgebauten Dichtkörper (152A) als Bestandteil der Membran (152) aufweist, der in einer ersten Stellung den Strömungskanal (151A) durch Anliegen an der Dichtfläche (151E) schließt, wobei die Membran (152) und der Dichtkörper (152A) als einstückiges Produkt und aus dem gleichen Material hergestellt sind, und
einem Federelement (154), das mit der elastischen Membran (152) gekoppelt ist, um diese zur Dichtfläche (151E) hin vorzuspannen, so dass bei einer zweiten Stellung des Dichtkörpers (152A) der Strömungskanal (151A) geöffnet ist.

2. Einlassventil nach dem vorhergehenden Anspruch, wobei an dem Ventilkörper ein Anschluss (151B) in Strömungsverbindung mit dem Strömungskanal (151A) zum Anschluss einer Leitung (158) zum Luft- und/oder Gaseinlass in den Melkbecher vorgesehen ist, und an dem Anschluss (151B) ein Verriegelungselement (151C) zur Verriegelung der Leitung (158) ausgebildet ist.

3. Einlassventil nach einem der vorhergehenden Ansprüche, das ferner ein Kraftübertragungselement (153) zwischen dem Federelement (154) und der elastischen Membran (152) aufweist.

4. Einlassventil nach dem vorhergehenden Anspruch, wobei das Kraftübertragungselement (153) und/oder die elastische Membran (152) ein Zentrierelement (153A) aufweisen.

5. Einlassventil nach einem der vorhergehenden Ansprüche, wobei ein durch Schnapprastung an dem Ventilkörper (151) arretierbarer, selbstpositionierender Deckel (155) vorgesehen ist.

6. Einlassventil nach einem der vorhergehenden Ansprüche, wobei die Anzahl an individuellen Komponenten im betriebsbereiten Zustand des Einlassventils, ohne die Leitung zum Luft- und/oder Gaseinlass, sieben oder kleiner ist.

7. Melkbecher (200; 300) mit
einer ersten Öffnung (216) mit einem darin aufgenommenen Einlassventil (150) nach einem der Ansprüche 1 bis 6,
einer zweiten Öffnung (213; 313) mit einer darin eingeführten Einlassleitung (158) für einen von dem Einlassventil (150) gesteuerten Luft- und/oder Gasstrom,
einem ersten Anschlussbereich (213; 313), der zur Strömungsverbindung mit einem Milchableitungsbereich oder zur Aufnahme oder Führung des Milchableitungsbereichs dient, und
einem zweiten Anschlussbereich (212; 312), der bei betriebsbereit installierter elastischer Zitzenaufnahme (290; 390) in dem Melkbecher (200; 300) mit dem zwischen einer Außenfläche der Zitzenaufnahme (290; 390) und einer Wandung des Melkbechers gebildeten Pulsationsraum (220; 320) in Strömungsverbindung steht.

8. Melkbecher nach dem vorhergehenden Anspruch, wobei an der Einlassleitung ein komplementäres Verriegelungselement (158A) vorgesehen ist, das mit dem Verriegelungselement (151C) des Anschlusses (151B) lösbar in Eingriff bringbar ist.

9. Melkbecher nach dem vorhergehenden Anspruch, wobei das komplementäre Verriegelungselement (158A) und das Verriegelungselement (151C) durch Schnapprastung in Eingriff bringbar sind.

10. Melkbecher nach einem der Ansprüche 7 bis 9, wobei die Einlassleitung (158) so ausgebildet ist, dass ein Luft- und/oder Gasaustrittspunkt der Leitung in einem Bereich mit geringer Milchexposition positionierbar ist.

11. Melkbecher nach dem vorhergehenden Anspruch, wobei der Luft- und/oder Gasaustrittspunkt der Einlassleitung (158) in einem Bereich mit geringer Milchexposition positioniert ist.

12. Melkbecher nach dem vorhergehenden Anspruch, wobei der erste Anschlussbereich (213; 313) als ein angewinkelter Anschluss aus der Wandung herausgeführt ist und die Einlassleitung (158) so vorgesehen ist, dass der Luft- und/oder Gasaustrittspunkt der Einlassleitung im Bereich des angewinkelten Anschlusses oder außerhalb des Anschlusses des Melkbechers (200; 300) liegt.

13. Melkbecher nach dem vorhergehenden Anspruch, wobei die Einlassleitung (158) so in dem Anschluss positioniert ist, dass der Luft- und/oder Gasaustrittspunkt außermittig nach oben in Bezug auf den Querschnitt des ersten Anschlusses (313) liegt.

14. Melkbecher nach einem der Ansprüche 11 bis 13, wobei der Luft- und/oder Gasaustrittspunkt der Einlassleitung (158) so ausgebildet ist, dass er eine hemmende Wirkung für den Eintritt von Flüssigkeit hat.

15. Melkbecher nach Anspruch 11, wobei der erste Anschlussbereich als ein in Längsrichtung ausgebildeter Anschluss des Melkbechers vorgesehen ist und die Einlassleitung gewinkelt ausgebildet ist, so dass ein Teil der Einlassleitung in Strömungsrichtung verläuft.

## Claims

1. Inlet valve (150) for a teat cup (200, 300) for controlled inlet of air and/or gas into a milk discharge area of the teat cup (200, 300), comprising
a valve body (151) having a controllable flow channel (151A) terminating at a sealing surface (151E),
a resilient diaphragm (152) adapted to be pressurized on a first side with pressure prevailing in a pulsation chamber of the teat cup and having on a second side a sealing body (152A) integral with the diaphragm as a constituent part of the diaphragm (152), which in a first position closes the flow channel (151A) by abutting the sealing surface (151E), wherein the diaphragm (152) and the sealing body (152A) are made as a one-piece product and of the same material, and
a spring member (154) coupled to the resilient diaphragm (152) to bias the diaphragm (152) toward the sealing surface (151E) such that when the sealing body (152A) is in a second position, the flow passage (151A) is open.

2. Inlet valve according to the preceding claim, wherein a connection (151B) is provided on the valve body in flow communication with the flow channel (151A) for connecting a line (158) for air and/or gas inlet into the teat cup, and a locking element (151C) is formed on the connection (151B) for locking the line (158).

3. Inlet valve according to any one of the preceding claims, further comprising a force transmission element (153) between the spring element (154) and the elastic diaphragm (152).

4. Inlet valve according to the preceding claim, wherein the force transmission element (153) and/or the elastic diaphragm (152) comprise a centering element (153A).

5. Inlet valve according to any one of the preceding claims, wherein a self-positioning cover (155) is provided that is lockable by snap-engagement to the valve body (151).

6. Inlet valve according to any of the preceding claims, wherein the number of individual components in the operational state of the inlet valve, excluding the line to the air and/or gas inlet, is seven or less.

7. Teat cup (200; 300) comprising
a first opening (216) having received therein an inlet valve (150) according to any one of claims 1 to 6,
a second opening (213; 313) having received therein an inlet line (158) for an air and/or gas flow controlled by the inlet valve (150),
a first connection region (213; 313) for fluid communication with a milk discharge portion or for receiving or guiding the milk discharge portion, and a second connection region (212; 312) in fluid-communication with a pulsation chamber (220; 320) formed between an outer surface of a teat receptacle (290; 390) and a wall of the teat cup when the elastic teat receptacle (290; 390) is operatively installed in the teat cup (200; 300).

8. Teat cup according to the preceding claim, wherein a complementary locking member (158A) is provided on the inlet line and is releasably engageable with the locking member (151C) of the connection (151B).

9. Teat cup according to the preceding claim, wherein the complementary locking member (158A) and the locking member (151C) are snap-engageable.

10. Teat cup according to any one of claims 7 to 9, wherein the inlet line (158) is configured such that an air and/or gas exit point of the line is positionable in an area of low milk exposure.

11. Teat cup according to the preceding claim, wherein the air and/or gas exit point of the inlet line (158) is positioned in an area with low milk exposure.

12. Teat cup according to the preceding claim, wherein the first connection region (213; 313) is led out of the wall as an angled connection and the inlet line (158) is provided such that the air and/or gas exit point of the inlet line is located in the area of the angled connection or outside the connection of the teat cup (200; 300).

13. Teat cup according to the preceding claim, wherein the inlet line (158) is positioned in the connection such that the air and/or gas exit point is off-center upwardly with respect to the cross-section of the first connection (313).

14. Teat cup according to any one of claims 11 to 13, wherein the air and/or gas exit point of the inlet line (158) is configured to have an inhibiting effect for the entry of liquid.

15. Teat cup according to claim 11, wherein the first connection region is provided as a longitudinally formed connection of the teat cup and the inlet line is formed angled so that a part of the inlet line extends in the flow direction.

## Revendications

1. Vanne d'admission (150) pour un gobelet trayeur (200, 300) pour l'admission régulée d'air et/ou de gaz dans une zone d'évacuation du lait du gobelet trayeur (200, 300), comprenant un corps de vanne (151) avec un canal d'écoulement (151A) pouvant être régulé, qui débouche sur une surface d'étanchéité (151E),
une membrane élastique (152) qui, sur un premier côté, peut être soumise à la pression régnant dans une chambre de pulsation du gobelet trayeur et qui, sur un deuxième côté, présente un corps d'étanchéité (152A) construit en tant qu'unité avec la membrane, faisant partie intégrante de la membrane (152), qui, dans une première position, ferme le canal d'écoulement (151A) en s'appliquant contre la surface d'étanchéité (151E), la membrane (152) et le corps d'étanchéité (152A) étant fabriqués en tant que produit monobloc et dans le même matériau, et
un élément de ressort (154) couplé à la membrane élastique (152) pour la précontraindre vers la surface d'étanchéité (151E), de sorte que dans une deuxième position du corps d'étanchéité (152A), le canal d'écoulement (151A) est ouvert.

2. Vanne d'admission selon la revendication précédente, un raccord (151B) étant prévu sur le corps de vanne en communication fluidique avec le canal d'écoulement (151A) pour le raccordement d'un conduit (158) pour l'admission d'air et/ou de gaz dans le gobelet trayeur, et un élément de verrouillage (151C) étant formé sur le raccord (151B) pour verrouiller le conduit (158).

3. Vanne d'admission selon l'une des revendications précédentes, comprenant en outre un élément de transmission de force (153) entre l'élément de ressort (154) et la membrane élastique (152).

4. Vanne d'admission selon la revendication précédente, l'élément de transmission de force (153) et/ou la membrane élastique (152) comprenant un élément de centrage (153A).

5. Vanne d'admission selon l'une des revendications précédentes, dans laquelle il est prévu un couvercle (155) à positionnement automatique pouvant être bloqué par encliquetage sur le corps de vanne (151).

6. Vanne d'admission selon l'une des revendications précédentes, le nombre de composants individuels fonctionnels de la vanne d'admission, sans le conduit vers l'entrée d'air et/ou de gaz, étant inférieur ou égal à sept.

7. Gobelet trayeur (200 ; 300) comprenant une première ouverture (216) dans laquelle est logée une vanne d'admission (150) selon l'une des revendications 1 à 6, une deuxième ouverture (213 ; 313) dans laquelle est inséré un conduit d'admission (158) pour un flux d'air et/ou de gaz régulé par la vanne d'admission (150),
une première partie de raccordement (213 ; 313) qui sert à la communication fluidique avec une partie d'évacuation du lait ou à la réception ou au guidage de la partie d'évacuation du lait, et
une deuxième zone de raccordement (212 ; 312) qui, lorsque le logement de trayon élastique (290 ; 390) est installé de manière opérationnelle dans le gobelet trayeur (200 ; 300), est en communication fluidique avec l'espace de pulsation (220 ; 320) formé entre une surface extérieure du logement de trayon (290 ; 390) et une paroi du gobelet trayeur.

8. Gobelet trayeur selon la revendication précédente, un élément de verrouillage complémentaire (158A) étant prévu sur le conduit d'entrée et pouvant être mis en prise de manière amovible avec l'élément de verrouillage (151C) du raccord (151B).

9. Gobelet trayeur selon la revendication précédente, l'élément de verrouillage complémentaire (158A) et l'élément de verrouillage (151C) pouvant être mis en prise par encliquetage.

10. Gobelet trayeur selon l'une des revendications 7 à 9, le conduit d'entrée (158) étant configuré pour permettre le positionnement d'un point de sortie d'air et/ou de gaz du conduit dans une zone de faible exposition au lait.

11. Gobelet trayeur selon la revendication précédente, le point de sortie d'air et/ou de gaz du conduit d'entrée (158) étant positionné dans une zone de faible exposition au lait.

12. Gobelet trayeur selon la revendication précédente, la première zone de raccordement (213 ; 313) sortant de la paroi sous la forme d'un raccordement coudé et le conduit d'entrée (158) étant prévu de telle sorte que le point de sortie d'air et/ou de gaz du conduit d'entrée se situe dans la zone du raccordement coudé ou à l'extérieur du raccordement du gobelet trayeur (200 ; 300) .

13. Gobelet trayeur selon la revendication précédente, le conduit d'entrée (158) étant positionné dans le raccord de telle sorte que le point de sortie d'air et/ou de gaz est excentré vers le haut par rapport à la section transversale du premier raccord (313).

14. Gobelet trayeur selon l'une des revendications 11 à 13, le point de sortie d'air et/ou de gaz du conduit d'entrée (158) étant configuré pour avoir un effet inhibiteur sur l'entrée de liquide.

15. Gobelet trayeur selon la revendication 11, la première zone de raccordement étant prévue comme un raccordement du gobelet trayeur formé dans le sens longitudinal et le conduit d'entrée étant formé de manière coudée de sorte qu'une partie du conduit d'entrée s'étend dans le sens d'écoulement.
